(19) Europäisches Patentamt
European Patent Office
Office européen des brevets

(11) Veröffentlichungsnummer: **0 021 260 B2**

(12) # NEUE EUROPÄISCHE PATENTSCHRIFT

(45) Veröffentlichungstag der neuen Patentschrift: **19.04.89**

(51) Int. Cl.⁴: **C 08 G 79/04**

(21) Anmeldenummer: **80103273.1**

(22) Anmeldetag: **12.06.80**

(54) **Verfahren zur Herstellung von thermoplastischen, verzweigten, aromatischen Polyphosphonaten.**

(30) Priorität: **22.06.79 DE 2925207**

(43) Veröffentlichungstag der Anmeldung:
**07.01.81 Patentblatt 81/1**

(45) Bekanntmachung des Hinweises auf die Patenterteilung:
**13.04.83 Patentblatt 83/15**

(45) Bekanntmachung des Hinweises auf die Entscheidung über den Einspruch:
**19.04.89 Patentblatt 89/16**

(84) Benannte Vertragsstaaten:
**DE FR GB IT**

(56) Entgegenhaltungen:
**EP-A-0 008 823**
**DE-B-1 268 389**
**FR-A-2 323 740**
**US-A-2 682 522**
**US-A-2 716 101**
**US-A-3 326 852**
**US-A-3 491 061**
**US-A-4 042 542**

**Journal of Macromolecular Science-Reviews in Macromolecular Chemistry, Vol.C1,No.1, S.109-170, 1967**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Schmidt, Manfred, Dr., z.Zt, Mobay Chemical Corporation, New Martinsville, Va. 26155 (US)**
Erfinder: **Bottenbruch, Ludwig, Dr., Woehlerstrasse 5, D-4150 Krefeld (DE)**
Erfinder: **Freitag, Dieter, Dr., Hasenheide 10, D-4150 Krefeld- Traar (DE)**
Erfinder: **Reinking, Klaus, Dr., Robert- Stolz-Strasse 168, D-5632 Wermelskirchen (DE)**
Erfinder: **Röhr, Harry, Dr., Zur Ville 21, D-5020 Frechen (DE)**
Erfinder: **Block, Hans- Dieter, Dr., Roggendorfstrasse 63, D-5000 Köln 80 (DE)**



LIBER, STOCKHOLM 1989

## Beschreibung

Die Erfindung betrifft ein Verfahren zur Herstellung von thermoplastischen verzweigten, aromatischen Polyphosphonaten mit mittleren Molekulargewichten (Zahlenmittel $\bar{M}_n$) von ca. 11 000 bis > 200 000, durch Umesterung.

Es ist bekannt, lineare, aromatische Polyphosphonate durch Kondensation von Arylphosphonsäuredichloriden und aromatischen Diolverbindungen in einem Lösungsmittel ohne Katalysator oder in Gegenwart von Erdalkalimetallhalogeniden als Katalysator herzustellen (vgl. US-Patentschriften 3 946 093 und 3 919 363). Aus den erhaltenen Lösungen dieser Polyphosphonate werden die Polyphosphonate entweder mit Methanol ausgefallt oder durch Abdampfen der Lösungsmittel isoliert. In jedem Fall werden lineare Polyphosphonate mit relativ niedrigem Molekulargewicht erhalten ($\bar{M}_n$ 6 000 bis 11 000), die noch Restmengen organisch gebundenen Chlors enthalten (vgl. Vergleichsbeispiel 1 der vorliegenden Anmeldung). Sie können als Flammschutzadditive für Kunststoffe Verwendung finden. Als Ausgangsmaterial für die Herstellung von thermoplastischen Formkörpern sind derartige Polyphosphonate wegen des zu niedrigen Molekulargewichtes und des bei höherer Temperatur abspaltbaren bzw. verseifbaren Restchlors kaum geeignet.

Gemäß US-PS-4 046 724 sollen lineare Polyphosphonate mit durchschnittlichen Molekulargewichten ($\bar{M}_n$) von 300 bis 70 000 mit Polyalkylenterephthalaten zur Verbesserung der Flammwidrigkeit kombiniert werden. Dieser Schrift läßt sich nicht entnehmen, nach welchem Verfahren die linearen Polyphosphonate hohen Molekulargewichtes hergestellt werden können. In den Beispielen der Schrift werden nur Polyphosphonate eingesetzt, die maximal ein durchschnittliches Molekulargewicht ($\bar{M}_n$) von 12 000 besitzen.

Weiter ist es aus US-PS-2 682 522 bekannt, Phosphonsäurediarylester mit aromatischen Dihydroxiverbindungen in Gegenwart katalytischer Mengen wasserfreier Erdalkalimetallhalogenide in der Schmelze bei 100°C bis 400°C bei Atmosphärendruck und anschließendem vermindertem Druck zu linearen, aromatischen Polyphosphonaten unter Abdestillieren der flüchtigen Bestandteile umzuestern. Auch hierbei erhält man keine ausreichend hochmolekularen Polymere von Chemiewerkstoffcharakter. Die Reaktionsgeschwindigkeit der Schmelzumesterung ist bei dieser Verfahrensweise so gering, daß technisch verwertbare Polymere von ausreichend hohem Kondensationsgrad nicht erhalten werden (siehe auch Vergleichsbeispiel 2 der vorliegenden Erfindung).

Schließlich ist aus der US-PS-2 716 101 u. a. bekannt, Alkyl- oder Arylphosphonyldichloride, aromatische Dihydroxiverbindungen und Phosphoroxichlorid bzw. Phenyldichlorphosphat in Gegenwart von wasserfreiem Magnesiumchlorid unter Abspaltung von Chlorwasserstoff und Phenol zu Polyphosphonaten mit Phosphatgruppen als Verzweigungsstellen zu kondensieren. Obwohl diese erhaltenen kautschukartigen Polymeren Strukturen der erfindungsgemäß erhaltenen Polyphosphonate formal enthalten können, unterscheiden sie sich von diesen dadurch, daß sie weit unter 11 000 liegende durchschnittliche Molekulargewichte (Zahlenmittel $\bar{M}_n$) aufweisen und nicht zur Herstellung von Formkörpern mit hohen Wärmestandfestigkeiten und hohem mechanischen Eigenschaftsniveau geeignet sind, wie auch aus den Vergleichsversuchen 3 und 4 der vorliegenden Anmeldung hervorgeht.

Die bisher bekannten linearen, aromatischen Polyphosphonate werden stets als Additive für andere Polymere eingesetzt, um die Flammwidrigkeit der so erhaltenen Mischungen zu verbessern.

Aufgabe der vorliegenden Erfindung war es nun, thermoplastische Polyphosphonate herzustellen, die als solche ohne Zusatz anderer Polymerer zur Herstellung von Formkörpern mit hoher Brandwidrigkeit, hoher Wärmeformbeständigkeit und hohem mechanischen Eigenschaftsniveau geeignet sind.

Die Aufgabe wurde dadurch gelöst, daß stets ausgehend von Ausgangsmaterialien mit einem Reinheitsgrad von über 99,1 %, vorzugsweise von über 99,7 %, Diarylphosphonate, die gegebenenfalls geringen Mengen von Triarylphosphaten enthalten, mit aromatischen Dihydroxiverbindungen, gegebenenfalls abgemischt mit geringen Mengen an mindestens dreiwertigen, aromatischen Hydroxiverbindungen - eines der beiden Verzweigungsmittel Triarylphosphat bzw. die mindestens dreiwertigen aromatischen Hydroxyverbindungen müssen im Reaktonsgemisch anwesend sein - in Gegenwart von basischen Katalysatoren zu aromatischen verzweigten Polyphosphonaten mit mittleren Molekulargewichten (Zahlenmittel $\bar{M}_n$) von mindestens 11 000 umgeestert werden.

Gegenstand der Erfindung ist somit ein Verfahren zur Herstellung von thermoplastischen, verzweigten, aromatischen Polyphosphonaten mit mittleren Molekulargewichten (Zahlenmittel $\bar{M}_n$) von 11 000 bis > 200 000 durch Umesterung, dadurch gekennzeichnet, daß pro

a) 99,25 bis 99,975 Mol mindestens eines Diarylphosphonats,
b) 0,025 bis 0,75 Mol mindestens eines Triarylphosphats und/oder mindestens einer aromatischen Tri- oder Tetrahydroxiverbindung - die Summe der Mole aus a) und b), falls b) Triarylphosphat bedeutet, ist 100 - und
c) 93 bis 97 Mol mindestens einer aromatischen Dihydroxiverbindung

in der Schmelze bei 90°C bis 340°C in sauerstofffreier Gasatmosphäre bei Atmosphärendruck oder vermindertem Druck sowie in Gegenwart von $10^{-5}$ bis $5 \cdot 10^{-2}$ Mol-%, bezogen auf 100 Mol-% aromatischer Dihydroxiverbindung, mindestens eines basischen Katalysators unter Abdestillieren der flüchtigen Bestandteile umgeestert werden.

Vorzugsweise besitzen die erfindungsgemäß hergestellten thermoplastischen, verzweigten, aromatischen Polyphosphonate mittlere Molekulargewichte (Zahlenmittel $\bar{M}_n$) von 13 000 bis 80 000, insbesondere 13 000 bis 40 000. Die Bestimmung der Molekulargewichte erfolgt nach der Methode der Membranosmose mit Hilfe von Membranen, die für Teilen mit einem Molekulargewicht bis zu 3 000 durchlässig sind.

Vorzugsweise werden für die Umesterung Phosphonsäurediarylester der Formel I verwendet

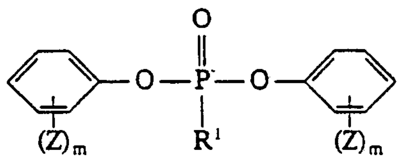

(I)

worin

$R^1$ mindestens einen der Reste
$C_1$-$C_{12}$-Alkyl,
$C_2$-$C_{12}$-Alkenyl,
$C_6$-$C_{30}$ Cycloalkyl, Cycloalkenyl, Aryl, Arylalkyl oder Arylalkenyl bedeutet und wobei die jeweilige Arylgruppe nicht substituiert oder durch 1 - 5 $C_1$-$C_4$-Alkylgruppen oder durch 1 - 5 Halogenatome (F, Cl oder Br) oder durch die genannten Alkylgruppen und Halogenatome substituiert ist und ferner
Z F, Cl, Br oder $C_1$-$C_4$-Alkyl bedeutet und mehrere Z in einem Arylrest gleich oder verschieden sind und
m 0 oder eine ganze Zahl von 1 bis 5 ist.

Insbesondere werden Methyl- oder Phenylphosphonsäurediphenylester eingesetzt.

Bevorzugte aromatische Dihydroxiverbindungen entsprechen den Formeln II und III

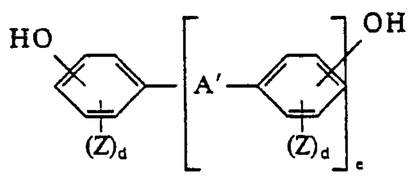

(II)

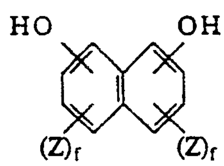

(III)

in denen

A' eine Einfachbindung, eine Alkylengruppe mit 1 bis 4 C-Atomen, eine Cycloalkylengruppe mit 5 oder 6 C-Atomen, eine Sulfonylgruppe, eine Carbonylgruppe, Sauerstoff oder Schwefel,
e die Zahl 0 oder 1,
Z F, Cl, Br oder $C_1$-$C_4$-Alkyl bedeutet und mehrere Z in einem Arylrest gleich oder verschieden sind,
d die ganzen Zahlen 0 oder 1 bis 4,
f die ganzen Zahlen 0 oder 1 bis 3 bedeuten.

Besonders bevorzugt sind Verbindungen der Formel II, in der e = 1 und A' eine Einfachbindung, den 2,2-Propylenrest oder Schwefel sowie d = 0 bedeuten, insbesondere jedoch 2,2-Bis(4-hydroxyphenyl)-propan und 4,4-Dihydroxidiphenyl.

Bevorzugte Triarylphosphate entsprechen der Formel IV

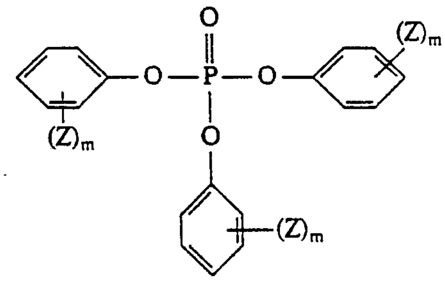

(IV)

worin Z und m die für Formel I angegebene Bedeutung haben. Besonders bevorzugt ist Triphenylphosphat.

Bevorzugte Tri- und Tetrahydroxiverbindungen sind:

Phloroglucin; 4,6-Dimethyl-2,4,6-tri-(4-hydroxiphenyl)-hepten-2;
4,6-Dimethyl-2,4,6-tri-(4-hydroxiphenyl)-heptan-2;
1,3,5-Tri-(4-hydroxiphenyl)-benzol;
1,1,1 -Tri-(4-hydroxyphenyl)-ethan;
Tri-(4-hydroxiphenyl)-phenylmethan;
2,2-Bis-[4,4-bis-(4-hydroxiphenyl)-cyclohexyl]-propan;
2,4-Bis-(4-hydroxiphenyl)-isopropylphenol;
2,6-Bis-(2'-hydroxi-5'-methyl-benzyl)-4-methylphenol;
2-(4-Hydroxiphenyl)-2-(2,4-dihydroxiphenyl)-propan;
Tetra-(4-hydroxiphenyl)-methan;
Tetra-[4-(4-hydroxiphenylisopropyl)-phenoxy]-methan und
1,4-Bis-(4,4''-dihydroxitriphenyl-methyl)-benzol oder deren Mischungen.

Als geeignete basische Katalysatoren können für die Umesterung eingesetzt werden:

Alkoholate der Alkali- oder Erdalkalimetalle wie Natriummethylat oder Calciummethylat,

Natrium-, Kalium- oder Lithiumphenolate von monofunktionellen Phenolen,

Natrium-, Kalium- oder Lithiumsalze der obengenannten aromatischen Dihydroxiverbindungen der allgemeinen Formeln II und III,

Hydride der Alkali- oder Erdalkalimetalle wie Lithiumhydrid, Natriumborhydrid oder Calciumhydrid,

Oxide der Alkali- und Erdalkalimetalle wie Lithiumoxid, Natriumoxid oder Bariumoxid,

Amide der Alkali- und Erdalkalimetalle wie Natriumamid oder Calciumamid sowie basisch reagierende Salkze der Alkali- oder Erdalkalimetalle mit organischen oder anorganischen Säuren wie Natriumacetat, Natriumbenzoat oder Natriumcarbonat.

Ebenfalls geeignet ist Imidazol. Auch Gemische der obengenannten Katalysatoren können verwendet werden. Bevorzugt werden jedoch monofunktionelle Alkalimetallphenolate wie Natriumphenolat verwendet.

Vorzugsweise werden die basischen Katalysatoren in Mengen von $7 \cdot 10^{-4}$ bis $2 \cdot 10^{-3}$ Mol-% bezogen auf 100 Mol-% aromatischer Dihydroxiverbindung, eingesetzt.

Alle für die Umesterung eingesetzten Ausgangsmaterialien sollen Reinheitsgrade von >99,1 %, vorzugsweise > 99,7 %, besitzen.

Zur Durchführung des erfindungsgemäßen Verfahrens werden die Phosphonsäurediarylester und gegebenenfalls Triarylphosphate mit den aromatischen Dihydroxiverbindungen und gegebenenfalls Tri- oder Tetrahydroxiverbindungen in sauerstofffreier Atmosphäre, d. h. in Gegenwart eines Inertgases wie beispielsweise Stickstoff oder Kohlendioxid und in Gegenwart der genannten basischen Katalysatoren bei Temperaturen zwischen 90° und 340°C, insbesonders zwischen 150° und 320°C, zur Reaktion gebracht. Unter Abdestillieren der flüchtigen aromatischen Monohydroxiaryle bei erhöhter Temperatur, vorzugsweise im Vakuum, wird die Reaktion unter Einleiten von Inertgas so lange weitergeführt, bis der gewünschte Kondensationsgrad erreicht ist.

Durch Zugabe einer basenbindenden Substanz wie beispielsweise Dimethylsulfat, Diethylsulfat, Benzoylchlorid oder Phenylchlorameisensäureester kann der basische Katalysator gegen Reaktionsende in der Polymerschmelze neutralisiert werden. Die gebildeten flüchtigen Neutralisationsprodukte können durch Abdestillieren im Vakuum aus der Schmelze entfernt werden. Nach Neutralisation des Katalysators kann die Umesterung noch in begrenztem Maße zur Erreichung eines gewünschten Molekulargewichtes weitergeführt werden.

Nach Beendigung der Polykondensation wird die gebildete Schmelze des Polyphosphonats in üblicher Weise in Granulate oder direkt in geformte Gebilde wie Filme, Fasern oder Borsten übergeführt. Die so erhaltenen Polyphosphonate lassen sich im Schmelzfluß durch technisch gebräuchliche Verarbeitungsaggregate wie Extruder und Spritzgußmaschinen zu Gebilden extremer Flammwidrigkeit und hoher Wärmeformbeständigkeit verarbeiten. Weitere wertvolle Eigenschaften der erfindungsgemäß hergestellten Polyphosphonate sind ihre ausgezeichneten mechanischen Eigenschaften wie beispielsweise ihre hohe Zähigkeit und Zugfestigkeit.

Die relativen Viskositäten der erfindungsgemäß hergestellten thermoplastischen aromatischen, verzweigten Polyphosphonate, ermittelt bei 25°C und einer Konzentration von 0,5 Gew.-% in Methylenchlorid, betragen 1,20

bis über 2,0 vorzugsweise 1,24 bis 1,40.

Die erfindungsgemäß hergestellten Polyphosphonate sind löslich in Methylenchlorid; 1,1,2,2-Tetrachlorethan; Trichlorethylen; Chloroform; Chlorbenzol; 1,2-Dichlorbenzol; Dioxan und Hexamethylphosphorsäuretriamid (HMPT).

Den Polyphosphonaten können antistatische Mittel, Pigmente, Formtrennmittel, thermische Stabilisatoren, Ultraviolettlichtstabilisatoren, Füllstoffe wie beispielsweise Talkum, Mineralwolle, Glimmer, Calciumcarbonat, Dolomit und weitere, sowie verstärkende Füllstoffe wie beispielsweise Glasfasern, Glaskugeln und Asbest zugemischt werden.

Die erfindungsgemäß hergestellten thermoplastischen aromatischen, verzweigten, vorzugsweise halogenfreien Polyphosphonate können überall dort Anwendung finden, wo thermoplastische Chemiewerkstoffe höchster Brandwidrigkeit benötigt werden und wo zusätzlich bei Einwirkung sehr hoher Temperaturen eine Entwicklung toxischer Pyrolysegase vermieden werden soll. Derartige Anwendungsgebiete sind beispielsweise im Fahrzeugbau, im Flugzeugbau, auf dem Raumfahrsektor oder auf dem Gebiet der Sicherheitstechnik zu finden.

Die nach dem oben beschriebenen, erfindungsgemäßen Verfahren hergestellten thermoplastischen aromatischen Polyphosphonate wurden bei 240° bis 320° C extrudiert und zu Prufkörpern ausgeformt.

Die Prüfung des Verhaltens bei Schlagbeanspruchung erfolgte sowohl durch Messung der Schlagzähigkeit nach Charpy $a_n$ gemäß DIN 53 453 oder ASTM D 256 als auch durch Messung der Kerbschlagzähigkeit nach Charpy $a_k$ gemäß DIN 53 453 oder ASTM D 256. Die Messung der Härte erfolgte durch Messung der Kugeldruckhärte HK gemäß DIN 53 456. Die Prüfung der mechanisch-elastischen Eigenschaften erfolgte durch Spannungs-Verformungsversuche wie durch Messung des Biege-E-Moduls gemäß DIN 53 457, durch Messung des Zug-E-Moduls gemäß DIN 53 457, durch Messung der Reißfestigkeit $\sigma_R$, der Reißdehnung $\varepsilon_R$, der Streckfestigkeit $\sigma_S$ und der Streckdehnung $\varepsilon_S$ gemäß DIN 53 455 (1968) oder ASTM D 882.

Die Prüfung der Wärmeformbeständigkeit erfolgt durch Messung des Vicat-Erweichungspunktes VSP gemäß DIN 53 460 oder ISO/R 75. Die Einfriertemperaturen $T_E$ wurden durch Differentialthermoanalyse (DTA) bestimmt.

Die Prüfung des Brandverhaltens erfolgte sowohl durch Messung des $O_2$-Index gemäß ASTM D 2863-70 als auch durch Messung der Nachbrennzeit gemäß dem UL-Test (Subj. 94).

Hierbei werden im Spritzgußverfahren bei 300 bis 310° C Teststäbe mit den Abmessungen:

127 x 12,7 x 1,6 mm (1/16") und
127 x 12,7 x 3,2 mm (1/8") ausgeformt.

Die Teststäbe wurden dem Testverfahren gemäß Underwriters Laboratories, Inc., Bulletin 94, Verbrennungstest zur Klassifizierung von Materialien, unterworfen.

Gemäß diesem Testverfahren wurden die so geprüften Materialien entweder mit UL-94 V-0, UL-94 V-I und UL-94 V-II klassifiziert, und zwar auf der Basis der mit den 10 Proben erhaltenen Ergebnisse. Die Kriterien für jede dieser V-Klassifizierungen gemäß UL-94 sind kurz wie folgt:

UL-94 V-0 Das durchschnittliche Flammen und/oder Glühen nach Entfernung der Zündflamme soll 5 Sekunden nicht überschreiten und keine der Proben soll Teilchen abtropfen, die absorbierende Baumwolle entzünden.

UL-94 V-I Das durchschnittliche Flammen und/oder Glühen nach Entfernung der Zündflamme soll 25 Sekunden nicht überschreiten und keine der Proben soll Teilchen abtropfen, die absorbierende Baumwolle entzünden.

UL-94 V-II Das durchschnittliche Flammen und/oder Glühen nach Entfernung der Zündflamme soll 25 Sekunden nicht überschreiten und die Proben tropfen flammende Teilchen ab, welche absorbierende Baumwolle entzünden.

Weiterhin wurde ein Teststab, der mehr als 25 Sekunden nach Entfernung der Zündflamme brannte, nicht nach UL-94 klassifiziert, sondern nach den Standardbedingungen der vorliegenden Erfindung als "brennt" bezeichnet. Die Vorschrift UL-94 erfordert weiterhin, daß alle Teststäbe eines Versuchs die jeweilige V-Bewertung erfüllen müssen, anderenfalls erhalten die 10 Teststäbe die Bewertung des schlechtesten Einzelstabes. Wenn beispielsweise 1 Stab mit UL-94 V-II bewertet wird und die anderen 9 Teststäbe mit UL-94 V-0 bewertet werden, dann erhalten alle 10 Stäbe die Bewertung UL-94 V-II.

**Beispiel 1**

6204 g (25,02 Mol) Methylphosphonsäurediphenylester,
4424 g (23,78 Mol) 4,4'-Dihydroxidiphenyl,
7,6 g ($1,21 \cdot 10^{-2}$ Mol) 1,4-Bis-(4,4''-dihydroxitriphenylmethyl)-benzol und
0,2 g ($1,72 \cdot 10^{-3}$ Mol) Natriumphenolat

werden unter Stickstoff bei 250° C intensiv in einem Autoklaven vermischt. Innerhalb von 3 Stunden wird unter einem von 250 auf 100 mbar absinkendem Vakuum und bei einer von 250° C auf 265° C ansteigenden Temperatur Phenol über eine auf 100° C geheizte Kolonne abdestilliert. Anschließend wird die Umesterung 5 Stunden unter einem allmählich auf 0,3 mbar absinkenden Druck und einer auf 310°C ansteigenden Innentemperatur fortgesetzt, wobei die Viskosität der Schmelze ansteigt. Man belüftet den Autoklav mit Stickstoff, läßt das Polymer bei 300° C und bei stillstehendem Rührer 1 Stunde absitzen und isoliert das Produkt durch Abspinnen unter Druck (ca. 10 atm) und Granulieren des Schmelzstranges. Man erhält 5,2 kg eines hochmolekularen amorphen Polyphosphonats mit einem Zahlenmittel-Molekulargewicht $\bar{M}_n$ = 27 600 und einer relativen Lösungsviskosität $\eta_{rel}$ = 1,321 (gemessen bei 25° C in Methylenchlorid in 0,5 gew.-%-iger Lösung).
P = 12,6 Gew.-%.

Brandwidrigkeitswerte und mechanische Prüfwerte des Polyphosphonats gemäß Beispiel 1

| Prüfung | Prüfnorm | Prüfwert |
|---|---|---|
| $O_2$-Index | ASTM-D 2863-70 | 75 % |
| UL-Test (Subj. 94) | | VO (1/16") Nachbrenn-zeit: 0 sec. |
| Vicat B | DIN 53 460 | 130° C |
| Schlagzähigkeit $a_n$ | DIN 53 453 | ungebrochen |
| Kerbschlagzähigkeit $a_k$ | DIN 53 453 | 32 |
| Kugeldruckhärte HK | DIN 53 456 | 102 MPa |
| Biege-E-Modul | DIN 53 457 | 2610 MPa |
| Biegefestigkeit | DIN 53 457 | 59 MPa |
| Zug-E-Modul | DIN 53 457 | 2420 MPa |
| Streckfestigkeit $\sigma_S$ | DIN 53 455 (1968) | 56 MPa |
| Streckdehnung $\varepsilon_S$ | DIN 53 455 | 8 % |
| Reißfestigkeit $\sigma_R$ | DIN 53 455 | 44 MPa |
| Reißdehnung $\varepsilon_R$ | DIN 53 455 | 21 % |

**Beispiel 2**

774,4 g (3,12 Mol) Methylphosphonsäurediphenylester,
677,0 g (2,97 Mol) 2,2-Bis-(4-hydroxiphenyl)-propan (= Bisphenol A)
9,4 g ($1,5 \cdot 10^{-2}$ Mol) 1 4-Bis-(4,4"-dihydroxitriphenylmethyl)-benzol
0,1 g ($8,62 \cdot 10^{-4}$ Mol) Natriumphenolat

werden analog der in Beispiel 1 geschilderten Verfahrensweise in einer Schmelzumesterungsreaktion umgesetzt. Man erhält 0,77 kg eines Polyphosphonats mit einem Zahlenmittel-Molekulargewicht

$\bar{M}_n$ = 21 400 und einer relativen Lösungsviskosität
$\eta_{rel}$ = 1,270 (gemessen bei 25° C in Methylenchlorid bei einer Konzentration von 0,5 Gew.-%)
P = 10,7 Gew.-%

Das amorphe Polymer besitzt eine Einfriertemperatur (nach DTA Differentialthermoanalyse) von $T_E$ = 90° C.

**Beispiel 3**

155,10 g (0,639 Mol) Methylphosphonsäurediphenylester,
88,56 g (0,472 Mol) 4,4'-Dihydroxiphenyl,
31,90 g (0,1187 Mol) 1,1-Bis-(4-hydroxiphenyl)-cyclohexan,
0,19 g ($0,304 \cdot 10^{-3}$ Mol) 1,4-Bis-(4,4"-dihydroxitripnenylmethyl)-benzol und
5 mg ($0,304 \cdot 10^{-4}$ Mol) Natriumphenolat

werden analog der in Beispiel 1 geschilderten Verfahrensweise in einer Schmelzumesterungsreaktion

umgesetzt. Man erhält 150 g eines amorphen Polyphosphonats mit folgenden Kenndaten:

$\bar{M}_n$ = 29 100 } Messung analog den in Beispiel 1 und 2 geschilderten Methoden
$\eta_{rel}$ = 1,350
P = 11,9 Gew.-%
$T_E$ = 137° C (nach DTA)

**Vergleichsbeispiel 1**

Beispiel 1 der US-PS 3 919 363 wurde exakt wiederholt. Das Polymer wurde durch Ausfällen in Methanol isoliert. Das so erhaltene Poly-(sulfonyldiphenylen)-phenylphosphonat hat ein mittleres Zahlenmittel-Molekulargewicht $\bar{M}_n$ von 9700, gemessen nach der Methode der membranosmometrischen Molekulargewichtsbestimmung, sowie eine relative Lösungsviskosität von $\eta_{rel}$ = 1,164 (gemessen bei 25° C in 0,5 %-iger Lösung in Methylenchlorid). Der Restgehalt an verseifbarem Chlor betrug 130 ppm; $T_E$ = 151° C (nach DTA). Eine aus einer Methylenchloridlösung dieses Polymers hergestellte Folie ist spröde. Das Polymer läßt sich thermoplastisch zu harten und sehr spröden Formkörpern verarbeiten, die schon beim Entformen brechen.
Aufgrund des niedrigen Molekulargewichtes und des hohen Restgehaltes an verseifbaren Chlor-Endgruppen ist dieses Polymer als thermoplastischer Werkstoff ungeeignet.

**Vergleichsbeispiel 2**

Beispiel 2 der US-Patentschrift 2 682 522 wurde exakt wiederholt. Das so erhaltene Poly-(resorcinyl)phenylphosphonat hatte ein mittleres Zahlenmittel-Molekulargewicht $\bar{M}_n$ von 7600, gemessen nach der Methode der membranosmometrischen Molekulargewichtsbestimmung, sowie eine relative Lösungsviskosität von $\eta_{rel}$ = 1,147 (gemessen bei 25° C in 0,5 %-iger Lösung in Methylenchlorid). Der Gehalt an anorganischem Chlor betrug 70 ppm. Aufgrund des niederen Molekulargewichtes war das Polymer sehr spröde und deshalb ungeeignet zur Verwendung als thermoplastischer Werkstoff.

**Beispiel 4**

3100 g (12,5 Mol) Methylphosphonsäurediphenylester,
3,35 g ($1,03 \cdot 10^{-2}$ Mol) Triphenylphosphat,
2216,2 g (11,92 Mol) 4,4'-Dihydroxidiphenyl und
0,1 g ($0,862 \cdot 10^{-3}$ Mol) Natriumphenolat

werden analog der in Beispiel 1 geschilderten Verfahrensweise in einer Schmelzumesterungsreaktion umgesetzt. Man erhält 2,6 kg eines amorphen Polyphosphonats mit folgenden Kenndaten:

$\bar{M}_n$ = 28 800
$\eta_{rel}$ = 1,332
P = 12,6 Gew.-%
Vicat-B-Temperatur (DIN 53 460): 130° C

**Beispiel 5**

3102 g (12,51 Mol) Methylphosphonsäurediphenylester,
1,7 g ($0,52 \cdot 10^{-2}$ Mol) Triphenylphosphat,
2,44 g ($0,39 \cdot 10^{-2}$ Mol) 1,4-Bis-(4,4''-dihydroxitriphenyl-methyl)-benzol,
2214,7 g (11,91 Mol) 4,4'-Dihydroxidiphenyl und
0,1 g ($0,862 \cdot 10^{-3}$ Mol) Natriumphenolat

werden analog der in Beispiel 1 geschilderten Verfahrensweise in einer Schmelzumesterungsreaktion umgesetzt. Man erhält 2,6 kg eines amorphen Polyphosphonats mit folgenden Kenndaten:

$\bar{M}_n$ = 27 700
$\eta_{rel}$ = 1,324
P = 12,6 Gew.-%
Vicat-B-Temperatur (nach DIN 53 460): 130° C

**Vergleichsbeispiele 3 und 4 gegenüber der US-PS 2 716 101**

**Vergleichsbeispiel 3**

Beispiel 1 der US-PS 2 716 101 wurde exakt wiederholt. Hierbei wurden Resorcin, Heptanphosphonyldichlorid und 5 Mol-% Phosphoroxychlorid (bezogen auf 100 Mol-% Heptanphosphonyldichlorid) in Gegenwart von wasserfreiem Magnesiumchlorid unter HCl-Abspaltung bei Temperaturen bis 150° C umgesetzt. Gegen Reaktionsende konnte das Reaktionsgemisch nicht mehr gerührt werden. Nach dem Erkalten war das resultierende Polymere sehr spröde und löste sich nicht in Dioxan, Methylenchlorid und Chlorbenzol. Eine Molgewichtsbestimmung oder die Messung der relativen Lösungsviskosität dieses Polymeren waren nicht möglich aufgrund des hohen Vernetzungsgrades und der damit verbundenen Unlöslichkeit.

Das erhaltene Polymere besaß 870 ppm an verseifbarem Chlor. Aufgrund dieses hohen Gehaltes an verseifbarem Chlor, der Sprödigkeit und des hohen Vernetzungsgrades ist dieses Polymere als thermoplastischer Chemiewerkstoff ungeeignet.

**Vergleichsbeispiel 4**

Beispiel 1 der US-PS 2 716 101 wurde wiederholt, wobei das Heptanphosphonyldichorid durch eine äquimolare Menge Methanphosphonyldichlorid substituiert wurde.

Das resultierende Polymer konnte gegen Reaktionsende nicht mehr gerührt werden; es war nach dem Erkalten spröde und löste sich nicht in Dioxan, Methylenchlorid und Chlorbenzol. Der Gehalt an verseifbarem Chlor betrug 420 ppm. Eine Molgewichtsbestimmung oder die Messung der relativen Lösungsviskosität waren aufgrund des hohen Vernetzungsgrades und der damit verbundenen Unlöslichkeit nicht möglich. Das Polymer kann thermoplastisch nicht verarbeitet werden.

**Patentansprüche**

1. Verfahren zur Herstellung von thermoplastischen, verzweigten, aromatischen Polyphosphonaten mit mittleren Molekulargewichten (Zahlenmittel $\bar{M}_n$) von 11 000 bis > 200 000 durch Schmelzumesterung, dadurch gekennzeichnet, daß pro

a) 99,25 bis 99,975 Mol mindestens eines Diarylphosphonats,
b) 0,025 bis 0,75 Mol mindestens eines Triarylphosphats und/oder mindestens einer aromatischen Tri- oder Tetrahydroxiverbindung - die Summe der Mole aus a) und b), falls b) Triarylphosphat bedeutet, ist 100 - und
c) 93 bis 97 Mol mindestens einer aromatischen Dihydroxiverbindung

in der Schmelze bei 90° C bis 340° C in sauerstofffreier Gasatmosphäre bei Atmosphärendruck oder vermindertem Druck in Gegenwart von $10^{-5}$ bis $5 \cdot 10^{-2}$ Mol-%, bezogen auf 100 Mol-% aromatischer Dihydroxiverbindung, mindestens eines basischen Katalysators unter Abdestillieren der flüchtigen Bestandteile umgeestert werden.

2. Verfahren nach Anspruch 1, dadurch gekennzeichnet, daß als basische Katalysatoren Natrium-, Kalium- oder Lithiumsalze von aromatischen Mono- oder Dihydroxiverbindungen verwendet werden.

3. Verfahren gemäß Anspruch 1, dadurch gekennzeichnet, daß für die Umesterung Phosphonsäurediarylester der Formel I

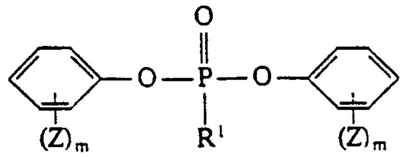

(I)

worin

$R^1$ mindestens einen der Reste
$C_1$-$C_{12}$Alkyl,
$C_2$-$C_{12}$Alkenyl,
$C_6$-$C_{30}$ Cycloalkyl, Cycloalkenyl, Aryl, Arylalkyl oder Arylalkenyl bedeutet, und wobei die jeweilige Arylgruppe nicht substituiert oder durch 1 - 5 $C_1$-$C_4$-Alkylgruppen oder durch 1 - 5 Halogenatome (F, Cl oder Br) oder durch die genannten Alkylgruppen und Halogenatome substituiert ist, und ferner
Z F, Cl, Br oder $C_1$-$C_4$-Alkyl bedeutet, und mehrere Z in einem Arylrest gleich oder verschieden sind, und
m 0 oder eine ganze Zahl von 1 bis 5 ist,

eingesetzt werden.

4. Verfahren gemäß Anspruch 1, dadurch gekennzeichnet, daß $R^1$ Methyl oder Phenyl bedeutet und $m = 0$ ist.

5. Verfahren gemäß Anspruch 1, dadurch gekennzeichnet, daß mindestens eine aromatische Dihydroxiverbindung der Formeln II und III

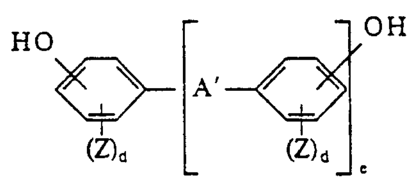

(II)

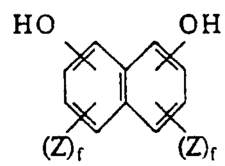

(III)

eingesetzt wird,
worin

A' eine Einfachbindung, eine Alkylengruppe mit 1 bis 4 C-Atomen, eine Cycloalkylengruppe mit 5 oder 6 C-Atomen, eine Sulfonylgruppe, eine Carbonylgruppe, Sauerstoff oder Schwefel,
e die Zahl 0 oder 1,
Z F, Cl, Br oder $C_1$-$C_4$-Alkyl bedeutet und mehrere Z in einem Arylrest gleich oder verschieden sind,
d 0 oder die ganzen Zahlen 1 bis 4,
f 0 oder die ganzen Zahlen 1 bis 3 bedeuten.

6. Verfahren gemäß Anspruch 1, dadurch gekennzeichnet, daß in Formel II $e = 1$ und A eine Enfachbindung, den 2,2-Propylenrest oder Schwefel sowie d die Zahl 0 darstellen.

7. Verfahren gemäß Anspruch 1, dadurch gekennzeichnet, daß als aromatische Tetrahydroxiverbindungen
Phloroglucin; 4,6-Dimethyl-2,4,6-tri-(4-hydroxiphenyl)-hepten-2;
4,6-Dimethyl-2,4,6-tri-(4-hydroxiphenyl)-heptan;
1,3,5-Tri-(4-hydroxiphenyl)-benzol;
1,1,1-Tri-(4-hydroxiphenyl)-ethan;
Tri-(4-hydroxiphenyl)-phenylmethan;
2,2-Bis-[4,4-bis-(4-hydroxiphenyl)-cyclohexyl]-propan;
2,4-Bis-(4-hydroxiphenyl)-isopropylphenol;
2,6-Bis-(2-hydroxi-5'-methyl-benzyl)-4-methylphenol;
2-(4-Hydroxiphenyl)-2-(2,4-dihydroxiphenyl)-propan;
Tetra-(4-hydroxiphenyl)-methan;
Tetra-[4-(4-hydroxiphenylisopropyl)-phenoxyl-methan und
1,4-Bis-(4,4''-dihydroxitriphenylmethyl)-benzol oder deren Mischungen
eingesetzt werden.

8. Verfahren gemäß Anspruch 1, dadurch gekennzeichnet, daß als Triarylphosphat eine Verbindung der Formel IV

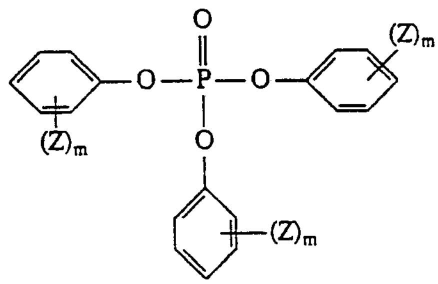

(IV)

eingesetzt wird,
worin

Z und m die für Formel I angegebene Bedeutung haben.

9. Verfahren gemäß Anspruch 8, dadurch gekennzeichnet, daß als Triarylphosphat Triphenylphosphat eingesetzt wird.

**Claims**

1. Process for the production of thermoplastic, branched aromatic polyphosphonates with average molecular weights (number average $\bar{M}_n$) of 11,000 to > 200,000 by transesterification in the melt, characterised in that per

a.) 99.25 to 99.975 moles of at least one diaryl phosphonate,
b.) 0.025 to 0.75 mole of at least one triaryl phosphate and/or of at least one aromatic tri- or tetrahydro-compound - the sum of the moles of a.) and b.), if b.) denotes triaryl phosphate, is 100 - and
c.)
93 to 97 moles of at least one aromatic dihydroxy compound are transesterified in the melt at 90°C to 340°C in an oxygen-free gas atmosphere either at atmospheric pressure or under reduced pressure and in the presence of $10^{-5}$ to $5 \cdot 10^{-2}$ mole %, based on 100 mole %, of aromatic dihydroxy compound, of at least one basic catalyst, the volatile constituents being removed by distillation.

2. Process according to Claim 1, characterised in that the basic catalysts used are sodium, potassium or lithium salts of aromatic monohydroxy or dihydroxy compounds.

3. Process according to Claim 1, characterised in that for the transesterification phosphonic acid diaryl esters of the formula I

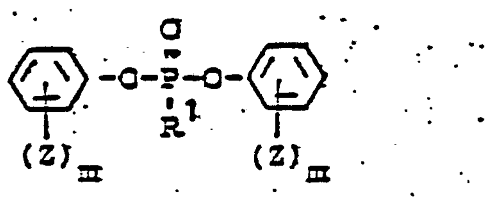

I

wherein

$R^1$ at least one of the radicals
$C_1$-$C_{12}$ alkyl,
$C_2$-$C_{12}$ alkenyl,
$C_6$-$C_{30}$ cycloalkyl, cycloalkenyl, aryl, arylalkyl or arylalkenyl, the aryl group in each case being unsubstituted or substituted by 1 - 5 $C_1$-$C_4$ alkyl groups or by 1 - 5 halogen atoms (F, Cl or Br) or by the above-mentioned alkyl groups and halogen atoms, and furthermore
Z denotes F, Cl, Br or $C_1$-$C_4$-alkyl and several Z's in one aryl radical are identical or different and
m is 0 or an integer from 1 to 5,
are used.

4. Process according to Claim 1, characterised in that $R^1$ denotes methyl or phenyl and m = 0.

5. Process according to Claim 1, characterised in that at least one aromatic dihydroxy compound of the formulae II and III

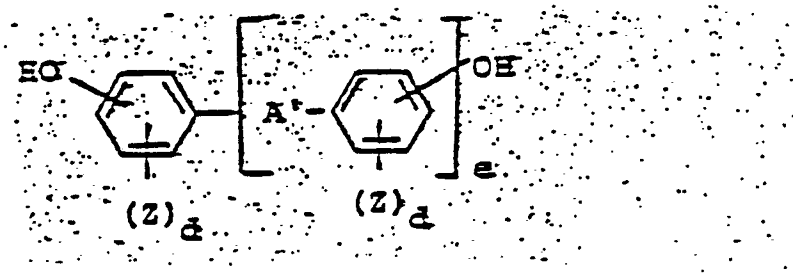
II

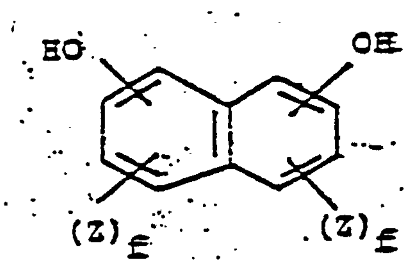
III

is used,
wherein

A' a single bond, an alkylene group with 1 to 4 carbon atoms, a cycloalkylene group with 5 or 6 carbon atoms, a sulphonyl group, a carbonyl group, oxygen or sulphur,
e the number 0 or 1,
Z denotes F, Cl, Br or $C_1$-$C_4$ alkyl and several Z's in one aryl radical are identical or different,
d denotes 0 or the integers 1 to 4, and
f denotes 0 or the integers 1 to 3.

6. Process according to Claim 1, characterised in that in the formula II e = 1 and A represents a single bond, the 2,2-propylene radical or sulphur, and d represents the number 0.

7. Process according to Claim 1, characterised in that the aromatic trihydroxy or tetrahydroxy compounds used are phloroglucinol; 4,6-dimethyl-2,4,6-tri-(4-hydroxy phenyl)-2-heptene; 4,6-dimethyl-2,4,6-tri-(4-hydroxy phenyl)-heptane; 1,3,5-tri-(4-hydroxy phenyl)-benzene; 1,1,1-tri-(4-hydroxy phenyl)-ethane, tri-(4-hydroxy phenyl)-phenyl methane; 2,2-bis-[4,4-bis-(4-hydroxy phenyl)-cyclohexyl]-propane; 2,4-bis-(4-hydroxy phenyl)-isopropyl phenol; 2,6-bis-(2-hydroxy-5'-methyl benzyl)-4-methyl phenol; 2-(4-hydroxy phenyl)-2-(2,4-dihydroxy phenyl)-propane; tetra-(4-hydroxy phenyl)-methane; tetra-[4-(4-hydroxy phenyl ispropyl)-phenoxy]-methane and 1,4-bis-(4,4''-dihydroxy triphenyl methyl)-benzene or mixtures thereof.

8. Process according to Claim 1, characerised in that the triaryl phosphate used is a compound of the formula IV

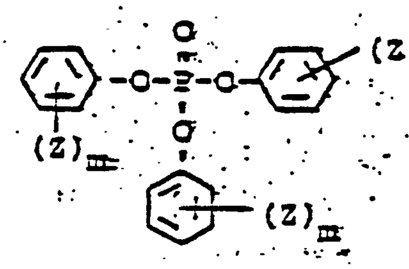
IV

wherein

Z and m have the meaning given for formula I.

9. Process according to Claim 8, characterised in that the triaryl phosphate used is triphenyl phosphate.

## Revendications

1. Procédé de production de polyphosphonates thermoplastiques aromatiques ramifiés ayant des poids moléculaires moyens (moyenne en nombre $\bar{M}_n$) de 11 000 à plus de 200 000 par transestérification à l'état fondu, caractérisé en ce que, pour

a) 99,25 à 99,975 moles d'au moins un phosphonate de diaryle,

b) 0,025 à 0,75 mole d'au moins un phosphate de triaryle et/où d'au moins un composé aromatique tri- ou tétrahydroxylique la somme des moles de a) et b), au cas ou b) désigne un phosphate de triaryle, est égale à 100 - et

c) 93 à 97 moles d'au moins un composé aromatique dihydroxylique

sont transestérifiées à l'état fondu à 90 - 340°C en atmosphère gazeuse dépourvue d'oxygène à la pression atmosphérique ou sous pression réduite en présence de $10^{-5}$ à $5 \cdot 10^{-2}$ moles %, par rapport à 100 moles % de composé dihydroxylique aromatique, d'au moins un catalyseur basique avec élimination par distillation des composants volatils.

2. Procédé suivant la revendication 1, caractérisé en ce qu'on utilise comme catalyseurs basiques des sels de sodium, potassium ou lithium de composés aromatiques mono- ou dihydroxyliques.

3. Polyphosphonate suivant la revendication 1, caractérisé en ce qu'on utilise pour la transestérification des esters diaryliques d'acide phosphonique de formule I

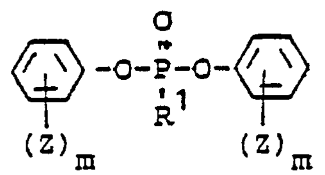

I

dans laquelle

$R^1$ est au moins l'un des restes
alkyle en $C_1$ à $C_{12}$,
alcényle en $C_2$ à $C_{12}$,
cycloalkyle, cycloalcényle, aryle, arylalkyle ou arylalcényle en $C_6$ à $C_{30}$, chaque groupe aryle étant alors non substitué ou étant substitué par 1 à 5 groupes alkyle en $C_1$ à $C_4$ ou par 1 à 5 atomes d'halogènes (F, Cl ou Br) ou par les groupes alkyle et les atomes d'halogènes mentionnés, et en outre

Z désigne F, Cl, Br ou un groupe alkyle en $C_1$ à $C_4$ et plusieurs Z dans un reste aryle sont égaux ou différents, et

m est égal à 0 ou à un nombre entier de 1 à 5.

4. Procédé suivant la revendication 1, caractérisé en ce que $R^1$ est le groupe méthyle ou phényle et m est égal à 0.

5. Procédé suivant la revendication 1, caractérisé en ce qu'on utilise au moins un composé aromatique dihydroxylique de formules II et III

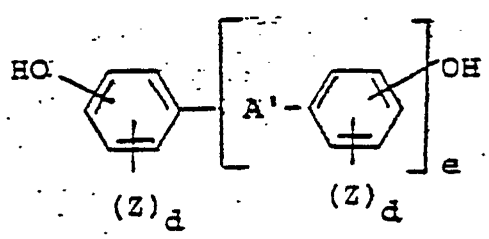

II

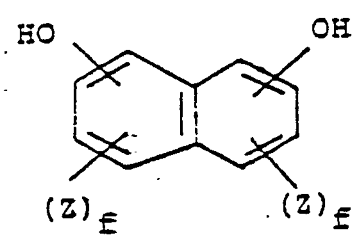

III

dans lesquelles

A' est une liaison simple, un groupe alkylène ayant 1 à 4 atomes de carbone, un groupe cycloalkylène ayant 5 ou 6 atomes de carhone, un groupe sulfonyle, un groupe carbonyle, l'oxygène ou le soufre,
e est le nombre 0 ou 1
Z représente F, Cl, Br ou un groupe alkyle en $C_1$ à $C_4$ et plusieurs Z dans un reste aryle sont égaux ou différents,
d est égal à 0 ou aux nombres entiers de 1 à 4,
f est égal à 0 ou aux nombres entiers de 1 à 3.

6. Procédé suivant la revendication 1, caractérisé en ce que dans la formule II, e est égal à 1 et A est une liaison simple, le reste 2,2-propylène ou du soufre, de même que d représente le nombre 0.

7. Procédé suivant la revendication 1, caractérisé en ce qu'on utilise comme composés aromatiques trihydroxyliques ou tétrahydroxyliques, la fluoroglucine; le 4,6-diméthyl-2,4,6-tri-(4-hydroxyphényl)-heptène-2; le 4,6-diméthyl-2,4,6-tri-(4-hydroxyphényl)-heptane; le 1,3,5-tri-(4-hydroxyphényl)-benzène; le 1,1,1-tri-(4-hydroxyphényl)-éthane; le tri-(4-hydroxyphényl)-phénylméthane; le 2,2-bis-[4,4-bis-(4-hydroxyphényl)-cyclohexyl]-propane; le 2,4-bis-(4-hydroxyphényl) isopropylphénol; le 2,6-bis-(2-hydroxy-5'-méthylbenzyl)-4-méthylphénol; le 2-(4-hydroxyphényl)-2-(2,4-dihydroxyphényl)-propane; le tétra-(4-hydroxyphényl)-méthane; le tétra-[4-(4-hydroxyphénylisopropyl)-phénoxy]-méthane et le 1,4-bis-(4,4''-dihydroxytriphénylméthyl)-benzène ou leurs mélanges.

8. Procédé suivant la revendication 1, caractérisé en ce qu'on utilise comme phosphate de triaryle un composé de formule IV

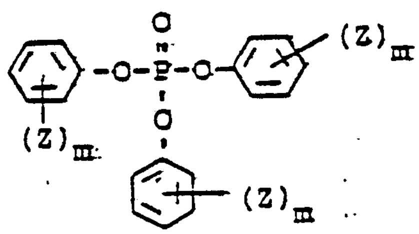

IV

dans laquelle

Z et m ont la définition indiquée pour la formule I.

9. Procédé suivant la revendication 8, caractérisé en ce qu'on utilise comme phosphate de triaryle le phosphate de triphényle.